(19) Europäisches Patentamt
European Patent Office
Office européen des brevets

(11) Veröffentlichungsnummer: **0 184 727**
**B1**

(12) # EUROPÄISCHE PATENTSCHRIFT

(45) Veröffentlichungstag der Patentschrift: **27.12.89**

(51) Int. Cl.⁴: **G 02 B 1/04,** C 08 F 226/00, C 08 F 220/06, C 08 F 271/00

(21) Anmeldenummer: **85115137.3**

(22) Anmeldetag: **29.11.85**

(54) **Weiche, wenig hydrophile kontaktoptische Gegenstände.**

(30) Priorität: **11.12.84 DE 3445092**

(43) Veröffentlichungstag der Anmeldung: **18.06.86 Patentblatt 86/25**

(45) Bekanntmachung des Hinweises auf die Patenterteilung: **27.12.89 Patentblatt 89/52**

(84) Benannte Vertragsstaaten: **AT BE CH DE FR GB IT LI NL SE**

(56) Entgegenhaltungen:
**GB-A-1 394 056**
**GB-A-2 010 865**
**GB-A-2 138 589**

(73) Patentinhaber: **BAYER AG, D-5090 Leverkusen 1 Bayerwerk (DE)**

(72) Erfinder: **Geyer, Otto- Christian, Dr., Bahnhofstrasse 12, D-6330 Wetzlar (DE)**
Erfinder: **Wingler, Frank, Dr., Walter- Flex- Strasse 17, D-5090 Leverkusen 1 (DE)**
Erfinder: **Schwabe, Peter, Dr., Dudweiler Strasse 17, D-5090 Leverkusen 1 (DE)**

**EP 0 184 727 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft neuartige kontaktoptische Formkörper, insbesondere Kontaktlinsen und Sklerallinsen, aus vernetzten Copolymerisaten olefinisch ungesättigter Verbindungen, die ein Wasseraufnahmevermögen von 4 bis 50 Gew.-%, bezogen auf hydratisierten Zustand, haben und deren Glasübergangstemperatur im trockenen Zustand zwischen 25 und 55°C und im hydratisierten Zustand unterhalb von 35°C liegt. Die Formkörper lassen sich in trockenem Zustand bei Raumtemperatur spanabhebend verarbeiten und wandeln sich erst im hydratisierten Zustand auf dem Auge in eine Weichlinse um.

Skleralschalen, auch Sklerallinsen genannt, wurden bereits gegen Ende des 19. Jahrhunderts entwickelt. Als Ausgangsmaterial diente Glas, das infolge seiner Härte mit dem Auge schlecht verträglich war. Eine Verbesserung wurde in den 30er Jahren dieses Jahrhunderts durch Einführung des gegenüber Glas leichter verarbeitbaren und verträglicheren Polymethylmethacrylat (PMMA) erzielt. Die mechanische Belastung der Augengewebe mit der sie bedeckenden Schale konnte mit PMMA zwar deutlich verringert, die für länger Tragezeiten der Linse angestrebte gute Verträglichkeit jedoch nur teilweise erreicht werden.

Weitere Überlegungen führten in den 50er Jahren zur Entwicklung einer überwiegend der Hornhaut aufliegenden kleinen Linse, der Kontaktlinse.

Durch die Reduzierung der Auflagefläche zwischen Kontaktlinse und Auge wurde die Verträglichkeit wesentlich verbessert. Mit Linsen aus PMMA traten jedoch wegen dessen Härte auch Irritationen auf, die durch Formänderungen nicht zu beheben waren. Es wurde daher die Suche nach weicheren Materialien aufgenommen. Vor etwa 15 Jahren leiteten sogenannte Hydrogellinsen eine neue Entwicklung im Kontaktlinsenbereich ein.

Hydrogellinsen sind hydrophile Polymernetzwerke auf Basis wasserlöslicher Monomere, die in der Lage sind, bis über 70 Gew.-% Wasser, bezogen auf die hydratisierte Form, aufzunehmen und infolge der Wasseraufnahme zu erweichen. Unter den wasserlöslichen Monomeren haben die N-Vinyllactame in Kombination mit Polyallyl-Vernetzern eine bedeutende Rolle gewonnen. Zum Stand der Technik seien beispielsweise die US-Patentschrift 4 158 089 und die Europäischen Patentschriften 79 720, 79 721, 106 650 sowie Shell Polym. 7 (1983) N.r 3, S. 69 - 71, genannt.

Derartige Polymernetzwerke und daraus hergestellte Kontaktlinsen sind bereits aus der GB-A-2 138 589 bekannt, jedoch sind die erzielbaren mechanischen Festigkeiten und Dimensionsstabilitäten nicht ausreichend.

Hydrogellinsen besitzen auf Grund ihrer weicheren Konsistenz und geringeren mechanischen Belastung der Augengewebe einen höheren Tragekomfort, haben aber den Nachteil, daß sie leicht zu beschädigen sind, einer intensiven Pflege bedürfen, und Stoffwechselprodukte, Pflegemittel sowie Bakterien anlagern und aufnehmen können.

In den letzten Jahren sind neue Linsen aus harten und halbharten Materialien, z. B. Polysilylmethacrylaten, Celluloseacetobutyrat u.a. mit geringem Wasseraufnahmevermögen entwickelt worden, die inzwischen einen beträchtlichen Marktanteil erringen konnten.

Gute Verträglichkeit, einfache Pflege und gute optische Eigenschaften des Materials sind hierfür ausschlaggebend.

Obwohl die Entwicklung dieser Linsenmaterialien positiv zu bewerten ist, besteht seit langem der Wunsch nach einem weichen, kautschukelastischen Material geringer Wasseraufnahme, insbesondere für VT (verlängerte Tragezeit)-Linsen. Dieser Wunsch konnte zum Teil mit Linsen aus Silikonkautschuk erfüllt werden. Bei der Silikonlinse treten jedoch Probleme mit der Benetzbarkeit auf. Sie muß darüber hinaus in einem speziellen Herstellungsprozeß gegossen werden. Das kostengünstigere Drehverfahren ist bei Silikonkautschuk nicht anwendbar.

Ein wesentlicher Unterschied der erfindungsgemäßen Formkörper gegenüber handelsüblichen Weichlinsen auf Basis von HEMA (2-Hydroxyethylmethacrylat) oder PVP (Polyvinylpyrrolidon) liegt in ihrer höheren Glasübergangstemperatur im hydratisierten Zustand. Die HEMA- und PVP-Materialien des Standes der Technik weisen zwar im trockenen Zustand eine Glasübergangstemperatur von über 100°C auf, erweichen jedoch im hydratisierten Zustand weit unter 20°C. Die erfindungsgemäßen Formkörper erweichen dagegen im hydratisierten Zustand zwischen 20 und 35°C.

Es wurde gefunden, daß diese Anforderungen mit vernetzten Copolymerisaten erfüllt werden können, die relativ wenig hydrophil sind und dennoch im hydratisierten Zustand eine Glasübergangstemperatur unterhalb von 35°C besitzen.

Gegenstand der vorliegenden Erfindung sind kontaktoptische Gegenstände, insbesondere Kontaktlinsen und Sklerallinsen, aus Wasser aufnehmenden, vernetzten Copolymerisaten olefinisch ungesättigter Monomere mit einem Erweichungspunkt im hydratisierten Zustand unterhalb von 35°C, vorzugsweise zwischen 20 und 35°C, dadurch gekennzeichnet, daß das Copolymerisat aus

A) 9,98 bis 55 Gew.-% eines N-Vinylamids der allgemeinen Formel

```
    O
    ||
R-C-N-CH=CH2
      |
      R'
```

in welcher R und R' unabhängig voneinander für $C_1$-$C_4$-Alkylgruppen stehen,
B) 90 bis 23 Gew.-% eines Methacrylsäureesters mit 1 bis 8 C-Atomen im Esterteil, gegebenenfalls
C) 0 bis 30 Gew.-% an mit A) und B) copolymerisierenden, olefinisch ungesättigten Monomeren,
D) 0,01 bis 1 Gew.-% eines polyfunktionellen (Meth)acrylsäureester-Vernetzers und/oder
E) 0,01 bis 1 Gew.-% eines polyfunktionellen Vinyl- oder Allyl-Vernetzers
besteht, wobei die Summe der Gewichtsprozente 100 beträgt, und

a) ein Wasseraufnahmevermögen bei 25°C von 4 bis 50 Gew.-% bezogen auf den hydratisierten Zustand, und
b) eine Glasübergangstemperatur im trockenen Zustand von 25 bis 55°C aufweist.

Überraschenderweise haben die erfindungsgemäßen kontaktoptischen Gegenstände ein wesentlich niedrigeres Wasseraufnahmevermögen, was zu einem verhinderten Risiko einer Einlagerung von Pflegemitteln, Stoffwechselprodukten und Bakterien führt.

Die Dickenzunahme durch Hydratation beträgt bei den erfindungsgemäßen kontaktoptischen Gegenständen bei 20°C, vorzugsweise 2 - 20 %, insbesondere 3 - 10, bezogen auf den trockenen Zustand; der Anteil an mit Wasser extrahierbaren Anteilen liegt vorzugsweise unter 0,5 Gew.-%, insbesondere unter 0,1 Gew.-%.

Für die erfindungsgemäßen kontaktoptischen Gegenstände geeignete Copolymerisate können durch Polymerisation von zwei oder mehreren olefinisch ungesättigten Monomeren in an sich bekannter Weise erhalten werden, wobei die Monomeren und ihr Mengenverhältnis so ausgewählt werden, daß das Copolymerisat eine Glasübergangstemperatur im oben angegebenen Bereich aufweist. Dies ist für den Fachmann auf Grund der annähernd linearen Beziehung zwischen der Glasübergangstemperatur und dem Molenbruch der Komponenten eines Copolymerisats leicht zu realisieren. Glasübergangstemperaturen verschiedenster Homopolymerisate sind z. B. bei Immergut Polymer Handbook, Interscience Publishers, New York, 1966, angegeben.

Weiter ist bei der Auswahl der Monomeren zu berücksichtigen, daß das Copolymerisat hohe Transparenz (vorzugsweise > 95 %, besonders bevorzugt > 98 % Lichtdurchlässigkeit bei 0,5 mm Schichtdicke, wobei der durch Totalreflexion bedingte Lichtverlust nicht berücksichtigt ist) aufweist und sein Wasseraufnahmevermögen bei 25°C zwischen 4 und 50 Gew.-%, vorzugsweise 5 bis 35 Gew.-%, besonders bevorzugt zwischen 6 und 20 Gew.-%, bezogen auf hydratisierten Zustand, liegt. Beide Eigenschaften lassen sich an Hand einfacher Vorversuche ermitteln.

Beispiele für erfindungsgemäß zu verwendende Copolymerisate sind solche auf Basis der folgenden Monomeren:

n-Butylacrylat/Methylmethacrylat (Gewichtsverhältnis 1 : 4 bis 3 : 1)
2-Ethylhexylacrylat/Methylmethacrylat (Gewichtsverhältnis 1 : 3 bis 3 : 1)
Ethylacrylat/Ethylmethacrylat (Gewichtsverhältnis 1 : 2 bis 1 : 1)
Vinylacetat/Vinylpropionat
Vinylchlorid/Ethylen
Vinylchlorid/Vinylacetat/Ethylen
Vinylchlorid/Fumarsäuremethylester

Erfindungsgemäß ist ein Copolymerisat auf Basis von
A) 9,98 bis 55 Gew.-%, bevorzugt 20 bis 35 Gew.-%, eines N-Vinylamids der allgemeinen Formel

```
  O
  ||
R-C-N-CH=CH2
    |
    R'
```

in welcher
R und R' unabhängig voneinander für $C_1$-$C_4$-Alkylgruppen, vorzugsweise Methylgruppen, stehen,
B) 90 bis 23 Gew.-%, bevorzugt 80 bis 33 Gew.-%, eines Methacrylsäureesters mit 1 bis 8, vorzugsweise 1 bis 6 C-Atomen im Esterteil, insbesondere n-Butyl- und/oder Isobutylmethacrylat in Kombination mit 0 bis 20 Gew.-% Methylmethacrylat, sowie gegebenenfalls
C) 0 bis 30 Gew.-% eines oder mehrerer an mit A) und B) copolymerisierenden, olefinisch ungesättigten Monomeren.

Die erfindungsgemäß einzusetzenden Copolymerisate müssen vernetzt sein.

Die Vernetzung kann in an sich bekannter Weise durch Radikalbildner, z. B. durch Einwirkung hochenergetischer Strahlung, z. B. Elektronenstrahlen, auf das fertige Copolymerisat oder vorzugsweise durch Mitverwendung von 0,01 bis 3 Gew.-%, bevorzugt 0,1 bis 2 Gew.-%, insbesondere 0,2 bis 1 Gew.-%, an mindestens 2 olefinisch ungesättigte Gruppen aufweisenden Vernetzern bei der Copolymerisation bewirkt werden.

Erfindungsgemäß geeignete Vernetzer sind D) (Meth)acrylester-Vernetzer und/oder E) Vinyl- oder Allyl-Vernetzer. Die Vernetzer D) sind an sich bekannte Verbindungen, welche neben einer (Meth)acrylestergruppe noch mindestens eine weitere gleiche oder verschiedene olefinisch ungesättigte Gruppe aufweisen. Hierzu gehören Acrylsäure- oder Methacrylsäureester von mehrfunktionellen Alkoholen, wie z. B. Ethylenglykoldimethylacrylat,

Propylenglykoldimethacrylat, Diethylenglykoldimethacrylat, Triethylenglykoldimethacrylat, Polyethylenglykoldimethacrylat, 1,4-Butandiol-dimethacrylat, 1,6-Hexandiol-dimethacrylat, Trimethylolpropantrimethacrylat, Pentaerythrittri- und tetramethacrylat, Methyl-1,5-pentandiol-dimethacrylat, Dihydrodicyclopentadienylmonomethacrylat, Allylmethacrylat, Vinylmethacrylat, Bisphenol-A-dimethacrylat, sowie die entsprechenden Acrylsäureester.

Die Vernetzer E) weisen mindestens zwei olefinisch ungesättigte Gruppen (Vinyl- oder Allylgruppen), jedoch keine (Meth)acrylestergruppierung auf. Beispiele für solche, an sich bekannte, Monomere sind Butandiol-divinylether, Divinylethylenharnstoff, Divinylpropylenharnstoff, Divinyladipat, Divinylbenzol, Divinylphthalat, Triallylcyanurat, Triallylisocyanurat, Diethylenglykol-diallylcarbonat, Diallylmaleat, Diallylitaconat, Trimethylolpropan-di- und Triallylether, Triallyltrimellitat, N,N-Diallylmelamine, etc.

Vorzugsweise werden bei der Copolymerisation sowohl Vernetzer D) als auch Vernetzer E) in einem Gewichtsverhältnis von 1 : 3 bis 3 : 1, bevorzugt 1 : 2 bis 2 : 1, insbesondere ca. 1 : 1, eingesetzt. Die Kombination der beiden Vernetzertypen ist vorteilhaft für die Transparenz und Radienstabilität der aus dem Copolymerisat gefertigten Linsen und Schalen und führt dazu, daß die Materialien nur sehr geringe Anteile (< 0,5 Gew.-%) an wasserextrahierbaren Anteilen enthalten.

Bei den oben genannten erfindungsgemäß bevorzugten Copolymerisaten werden als Komponente A) vorzugsweise die N-Methyl- N-Vinylamide von Essigsäure, Propionsäure und Buttersäure eingesetzt. Besonders bevorzugt ist das N-Methyl- N-Vinylacetamid.

Als Komponente B) der erfindungsgemäß bevorzugten Copolymerisate kommen aliphatische, cycloaliphatische, aromatische und araliphatische Methacrylsäureester in Betracht, vorzugsweise Methyl-; Ethyl-; n-, i- und t-Butyl-; Cyclohexyl-, Phenyl- und Benzylmethacrylat. Besonders bevorzugt sind n-Butyl- und Isobutylmethacrylat, gegebenenfalls in Kombination mit Methylmethacrylat.

Bei der Herstellung der oben beschriebenen erfindungsgemäß bevorzugten Copolymerisate können (vorzugsweise anstelle eines Teiles von B)) bis zu 30 Gew.-% an weiteren, mit A) und B) copolymerisierenden Monomeren C) eingesetzt werden. Diese sind insbesondere u.a. $C_1$-$C_{12}$-Alkyl- oder Cycloalkylester der Acrylsäure oder Methacrylsäure; Methacrylsäure; Acrylsäure; Vinylpyrrolidon; Monohydroxy- oder Dihydroxy-$C_2$-$C_6$-alkylester der (Meth)acrylsäure sowie deren Alkylether wie z. B. 2-Hydroxyethylmethacrylat, 2-Hydroxyethylacrylat, 2,3-Dihydroxypropylmethacrylat, 1,4-Butandiol-monoacrylat, 2-Ethoxyethyl-methacrylat; Glycidylmethacrylat; Vinylacetat, Vinyllaurat, Vinylpropionat und Vinylversat. Das Molverhältnis von B) zu C) soll 1 : 0,5 nicht übersteigen. Bevorzugt sind: Vinylacetat, Vinyllaurat, Vinylpropionat, Vinylversat (Versaticsäure-vinylester) sowie Methacrylsäure-2-oxyethyl-ethylester.

Erfindungsgemäße Copolymerisate besitzen somit die folgende Zusammensetzung:

A) 9,98 bis 35 Gew.-% N-Methyl-vinylacetamid,
B) 90 bis 33 Gew.-% n-Butylmethacrylat und/oder Isobutylmethacrylat, oder eine Mischungsform mit 0 bis 20 Gew.-% Methylmethacrylat,
C) 0 bis 30 Gew.-% eines oder mehrerer mit A) und B) copolymerisierenden, olefinisch ungesättigten Monomeren,
D) 0,01 bis 1 Gew.-% eines polyfunktionellen (Meth)acrylsäureester-Vernetzers,
E) 0,01 bis 1 Gew.-% eines polyfunktionellen Vinyl- oder Allyl-Vernetzers,

wobei die Summe der Gewichtsprozente jeweils 100 beträgt.

Das Wasseraufnahmevermögen dieser Copolymerisate beträgt ca. 4 bis 50 Gew.-%, bevorzugt 5 bis 20 Gew.-%, bezogen auf den hydratisierten Zustand, die Glasübergangstemperaturen der trockenen Copolymerisate liegen bei 25 bis 55°C. Nach Hydratisierung bis zur Gleichgewichtsfeuchte liegen die Glasübergangstemperaturen bei 20 bis 35°C. Charakteristisch für die Materialien ist der scharfe Übergang vom glasigen in den kautschukelastischen Zustand, der mit Hilfe einer thermomechanischen Differentialanalyse deutlich gemacht werden kann.

Die vernetzende Copolymerisation der olefinisch ungesättigten Monomeren kann nach herkömmlichen Techniken der radikalischen Polymerisation erfolgen, z. B. ausgelöst durch Wärme, Licht oder durch in Radikale zerfallende Initiatoren. Bevorzugt ist die Lichtpolymerisation, wie sie ausführlich in DE-OS-3 300 345 und Int. Chim. 1983, Nr. 242, S. 121 - 126, beschrieben ist. Die Polymerisation kann dabei als sogenannte Blockpolymerisation in Plattenkammern, aber auch in Glasröhren oder Kunststoffnäpfchen durchgeführt werden. Eine bevorzugte Ausführungsform ist die Polymerisation der Bestandteile in Kunststoffnäpfchen aus Polyolefinen, wie z. B. Polyethylen, Polypropylen, Polymethylpenten-1, Polyamiden oder Polyacetalen. Die Näpfchen können die für einen Rohling oder auch für die fertige Linse entsprechende Gestalt haben. Die Polymerisation kann auch unter Zusatz von Ethylenglykol erfolgen, das später mit Wasser ausgewaschen wird.

Das beschriebene Material ist hervorragend geeignet zur Herstellung von dünnen bis sehr dünnen VT-Linsen. Infolge der geringen Wasseraufnahme findet bei der Hydratisierung nur eine geringe Dickenzunahme statt. Unter dünnen bis sehr dünnen Linsen versteht man Linsen mit einer Mittendicke von 0,04 bis 0,15 mm bei Konstruktion für Minuslinsen (zur Korrektur von Kurzsichtigkeit), bzw. von 0,08 bis 0,3 mm bei Pluslinsen (Korrektur von Weitsichtigkeit) und 0,1 bis 0,4 mm bei Aphakielinsen (Korrektur von Linsenlosigkeit). Durch entsprechende Innen-Geometrien (asphärische Bauart) kann ein erhöhter Austausch an Tränenflüssigkeit erzeugt werden, wie es heutzutage bei Hartlinsen schon Stand der Technik ist, und damit die Verträglichkeit auf dem Auge erhöht werden.

Die dünnen bis sehr dünnen Linsen besitzen gegenüber herkömmlichen Linsen mit einer Mittendicke von mehr als 0,15 mm eine erhöhte Durchlässigkeit für Sauerstoff, was sich insbesondere bei verlängertem Tragen

von Kontaktlinsen als Vorzug erweist.

Das Neuartige an den erfindungsgemäßen Linsen ist, daß sie im trockenen Zustand bei Raumtemperatur gedreht, gefräst und poliert werden können und nach Hydratation auf dem Auge sich in ein weiches, mechanisch nicht belastendes Material verwandeln, ohne dabei wesentlich an Dicke zuzunehmen und die Stabilität zu verlieren. Die erfindungsgemäßen Linsen stellen somit eine neuartige und fortschrittliche Kombination der bisher bekannten harten und weichen Linsen dar.

**Beispiele**

Monomermischungen der in der nachstehenden Tabelle 1 aufgeführten Zusammensetzung wurden in zylindrischen Näpfchen aus Poly-4-methylpenten-1 mit 12 mm Durchmesser und 4 mm Höhe 6 Tage bei Raumtemperatur mit einer UV-Fluoreszenzlampe bestrahlt. Die erhaltenen Knöpfe (Blanks) wurden danach 6 Stunden bei 80°C und 2 Stunden bei 120°C getempert. Aus den Knöpfen wurden durch Drehen und Polieren Kontaktlinsen hergestellt.

**Tabelle 1**

| Zusammensetzung in Gew.-% | A | B | C | D | E |
|---|---|---|---|---|---|
| n-Butylmethacrylat | 78,99 | - | 53,99 | 73,99 | - |
| iso-Butylmethacrylat | - | 71,99 | - | - | 68,99 |
| Methylmethacrylat | - | - | 15 | - | - |
| N-Methylvinylacetamid | 20 | 25 | 30 | 20 | 30 |
| Vinylversat | - | 2 | - | - | - |
| Methacrylsäure-2-oxi-ethyl-ethylester | - | - | - | 5 | - |
| Ethylenglykoldimethacrylat | 0,5 | 0,5 | 0,5 | 0,5 | 0,5 |
| Triallylcyanurat | 0,5 | - | 0,5 | 0,5 | 0,5 |
| Divinylpropylenharnstoff | - | 0,5 | - | - | - |
| Azodiisobuttersäuredi-nitril | 0,01 | 0,01 | 0,01 | 0,01 | 0,01 |

Die aus den Materialien A bis E hergestellten Linsen wurden 6 Stunden bei Raumtemperatur in 5-proz. $H_2O_2$-Lösung behandelt und danach 6 Tage mit Ionenaustauschwasser dialysiert. An den hydratisierten Linsen konnten mit der Spaltlampe keine Schlieren, Trübungen oder Lichtstreuung beobachtet werden. Die Eigenschaften der Linsen sind in der Tabelle 2 zusammengestellt:

**Tabelle 2**

| Linsenmaterial | A | B | C | D | E |
|---|---|---|---|---|---|
| Glasübergangstemperatur im trockenen Zustand, (°C) | 35 | 30 | 40 | 25 | 28 |
| Glasübergangstemperatur im hydratisierten Zustand, (°C) | 22 | 23 | 25 | 15 | 22 |
| Wasseraufnahmevermögen, bez. auf hydratisierten Zustand (Gew.-% / | 5 | 8 | 10 | 8 | 10 |
| Dickenzunahme bei Hydratation (%) | 2 | 3,5 | 3,5 | 3,5 | 4 |

Die Prüfung der Linsen im Tierversuch am Kaninchenauge ergab auch nach 21 Tagen ununterbrochenen Tragens eine gute Biokompatibilität des Materials.

Zur Bestimmung der Dickenzunahme wurden fertig gedrehte trockene Linsen 6 Tage in physiologischer Kochsalzlösung bei 20°C gelagert. Zur Bestimmung der extrahierbaren Anteile wurden die Linsen nach der Lagerung gewaschen, 24 Stunden bei 80°C getrocknet und zurückgewogen. In jedem Fall betrug der Gewichtsverlust weniger als 0,1 Gew.-%.

Die Radienstabilität betrug ca. 0,05 mm, die Lichtdurchlässigkeit bei 4,5 mm Schichtdicke ca. 90 %, der Lichtverlust infolge von Totalreflektion ist inbegriffen.

## Patentansprüche

1. Kontaktoptische Formkörper, insbesondere Kontaktlinsen und Sklerallinsen, aus Wasser aufnehmenden, vernetzten Copolymerisaten olefinisch ungesättigter Monomere mit einem Erweichungspunkt im hydratisierten Zustand unterhalb von 35°C, dadurch gekennzeichnet, daß das Copolymerisat aus

A) 9,98 bis 55 Gew.-% eines N-Vinylamids der allgemeinen Formel

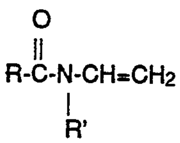

in welcher R und R' unabhängig voneinander für $C_1$-$C_4$-Alkylgruppen stehen,
B) 90 bis 23 Gew.-% eines Methacrylsäureesters mit 1 bis 8 C-Atomen im Esterteil, gegebenenfalls
C) 0 bis 30 Gew.-% an mit A) und B) copolymerisierenden, olefinisch ungesättigten Monomeren,
D) 0,01 bis 1 Gew.-% eines polyfunktionellen (Meth)acrylsäureester-Vernetzers und/oder
E) 0,01 bis 1 Gew.-% eines polyfunktionellen Vinyl- oder Allyl-Vernetzers
besteht, wobei die Summe der Gewichtsprozente 100 beträgt, und

a) ein Wasseraufnahmevermögen bei 25°C von 4 bis 50 Gew.-%, bezogen auf den hydratisierten Zustand, und
b) eine Glasübergangstemperatur im trockenen Zustand von 25 bis 55°C aufweist.

2. Formkörper nach Anspruch 1, dadurch gekennzeichnet, daß das Copolymerisat ein Wasseraufnahmevermögen von 5 bis 35 Gew.-% hat.

3. Formkörper nach Anspruch 1 oder 2, dadurch gekennzeichnet, daß das Copolymerisat eine Glasübergangstemperatur im trockenen Zustand von 28 bis 45°C aufweist.

4. Formkörper nach Anspruch 1 bis 3, dadurch gekennzeichnet, daß das Copolymerisat eine Glasübergangstemperatur im hydratisierten Zustand von 20 bis 35°C aufweist.

5. Formkörper nach Anspruch 1 bis 4, dadurch gekennzeichnet, daß der Formkörper eine Dickenzunahme bei der Hydratation von 2 - 20 % aufweist.

6. Formkörper nach Anspruch 1 bis 5, dadurch gekennzeichnet, daß bei der Herstellung des Copolymerisats 0,01 bis 3 Gew.-% an mindestens 2 olefinisch ungesättigte Gruppen aufweisenden Vernetzern mitverwendet wurden.

7. Formkörper nach Anspruch 6, dadurch gekennzeichnet, daß eine Kombination von (Meth)acrylsäureester-Vernetzer und Vinyl- oder Allyl-Vernetzer verwendet wurde.

8. Formkörper nach Anspruch 7, dadurch gekennzeichnet, daß der Anteil von Komponente A) 9,98 bis 35 Gew.-% beträgt.

9. Formkörper nach Anspruch 7 oder 8, dadurch gekennzeichnet, daß der Anteil von Komponente B) 90 bis 33 Gew.-% beträgt.

10. Verfahren zur Herstellung kontaktoptischer Formkörper, dadurch gekennzeichnet, daß man

A) 9,98 bis 55 Gew.-% eines N-Vinylamids der allgemeinen Formel

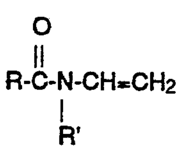

in welcher R und R' unabhängig voneinander für $C_1$-$C_4$-Alkylgruppen stehen,
B) 90 bis 23 Gew.-% eines Methacrylsäureesters mit 1 bis 8 C-Atomen im Esterteil in Kombination mit 0 bis 20 Gew.-% Methylmethacrylat, sowie gegebenenfalls
C) 0 bis 30 Gew.-% eines oder mehrerer an mit A) und B) copolymerisierenden, olefinisch ungesättigten Monomeren
D) 0,01 bis 1 Gew.-% eines polyfunktionellen (Meth)acrylsäureester-Vernetzers und/oder
E) 0,01 bis 1 Gew.-% eines polyfunktionellen Vinyl- oder Allyl-Vernetzers
in Gegenwart eines Radikalbildners polymerisiert, wobei die Monomeren und ihr Mengenverhältnis so ausgewählt

werden, daß das Copolymerisat eine Glasübergangstemperatur in trockenem Zustand von 25 bis 55°C und eine Transparenz von 95 % aufweist.

11. Verwendung von Copolymerisaten aus

A) 9,98 bis 55 Gew.-% eines N-Vinylamids der allgemeinen Formel

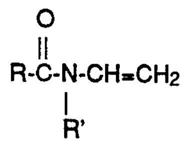

in welcher R und R' unabhängig voneinander für $C_1$-$C_4$-Alkylgruppen stehen,
B) 90 bis 23 Gew.-% eines Methacrylsäureesters mit 1 bis 8 C-Atomen im Esterteil in Kombination mit 0 bis 20 Gew.-% Methylmethacrylat, sowie gegebenenfalls
C) 0 bis 30 Gew.-% eines oder mehrerer an mit A) und B) copolymerisierenden, olefinisch ungesättigten Monomeren
D) 0,01 bis 1 Gew.-% eines polyfunktionellen (Meth)acrylsäureester-Vernetzers und/oder
E) 0,01 bis 1 Gew.-% eines polyfunktionellen Vinyl- oder Allyl-Vernetzers,
wobei die Monomeren und ihre Mengenverhältnisse so ausgewählt werden, daß das Copolymerisat eine Glasübergangstemperatur in trockenem Zustand von 25 bis 55°C und eine Transparenz von > 95 % aufweist, zur Herstellung von kontaktoptischen Formkörpern.

## Claims

1. Contact optical shaped articles, especially contact lenses and scleral lenses, composed of water-absorbing, crosslinked copolymers of olefinically unsaturated monomers with a softening point in the hydrated state below 35°C, characterized in that the copolymer consists of

A) 9.98 to 55 % by weight of a N-vinylamide of the general formula

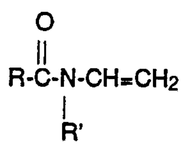

in which R and R' represent, independently of one another, $C_1$-$C_4$-alkyl groups,
B) 90 to 23 % by weight of a methacrylic ester with 1 to 8 C atoms in the ester moiety, where appropriate
C) 0 to 30 % by weight of olefinically unsaturated monomers copolymerizing with A) and B),
D) 0.01 to 1 % by weight of a polyfunctional (meth)acrylic ester crosslinker and/or
E) 0.01 to 1 % by weight of a polyfunctional vinyl or allyl crosslinker
with the total of percentages by weight being 100, and has

a) a water-absorption capacity at 25°C of 4 to 50 % by weight based on the hydrated state, and
b) a glass transition temperature in the dry state of 25 to 55°C.

2. Shaped articles according to claim 1, characterized in that the copolymer has a water-absorption capacity of 5 to 35 % by weight.

3. Shaped articles according to claim 1 or 2, characterized in that the copolymer has a glass transition temperature in the dry state of 28 to 45°C.

4. Shaped articles according to claim 1 to 3, characterized in that the copolymer has a glass transition temperature in the hydrated state of 20 to 35°C.

5. Shaped articles according to claim 1 to 4, characterized in that the increase in thickness of the shaped article on hydration is 2 - 20 %.

6. Shaped articles according to claim 1 to 5, characterized in that 0.01 to 3 % by weight of crosslinkers having at least 2 olefinically unsaturated groups have also been used in the preparation of the copolymer.

7. Shaped articles according to claim 6, characterized in that a combination of (meth)acrylic ester crosslinker and vinyl or allyl crosslinker has been used.

8. Shaped articles according to claim 7, characterized in that the proportion of component A) is 9.98 to 35 % by weight.

9. Shaped articles according to claim 7 or 8, characterized in that the proportion of component B) is 90 to 33 % by weight.

10. Process for the preparation of contact optical shaped articles, characterized in that

A) 9.98 to 55 % by weight of a N-vinylamide of the general formula

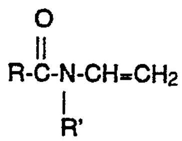

in which R and R' represent, independently of one another, $C_1$-$C_4$-alkyl groups,
B) 90 to 23 % by weight of a methacrylic ester with 1 to 8 C atoms in the ester moiety in combination with 0 to 20 % by weight of methyl methacrylate, and, where appropriate,
C) 0 to 30 % by weight of one or more olefinically unsaturated monomers copolymerizing with A) and B)
D) 0.01 to 1 % by weight of a polyfunctional (meth)acrylic ester crosslinker and/or
E) 0.01 to 1 % by weight of a polyfunctional vinyl or allyl crosslinker
are polymerised in the presence of a radical former, the monomers and the ratio of amounts thereof being selected such that the copolymer has a glass transition temperature in the dry state of 25 to 55°C and a transparency of > 95 %.

11. Use of copolymers composed of

A) 9.98 to 55 % by weight of a N-vinylamide of the general formula

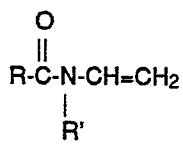

in which R and R' represent, independently of one another, $C_1$-$C_4$-alkyl groups,
B) 90 to 23 % by weight of a methacrylic ester with 1 to 8 C atoms in the ester moiety in combination with 0 to 20 % by weight of methyl methacrylate, and, where appropriate,
C) 0 to 30 % by weight of one or more olefinically unsaturated monomers copolymerizing with A) and B)
D) 0.01 to 1 % by weight of a polyfunctional (meth)acrylic ester crosslinker and/or
E) 0.01 to 1 % by weight of a polyfunctional vinyl or allyl crosslinker,
the monomers and the ratios of the amounts thereof being selected such that the copolymer has a glass transition temperature in the dry state of 25 to 55°C and a transparency of > 95 %, for the preparation of contact optical shaped articles.

**Revendications**

1. Corps moulés optiques de contact, en particulier lentilles de contact et lentilles solérales, constitués de produits réticulés de copolymérisation absorbant l'eau obtenus à partir de monomères à insaturation oléfinique, ayant, à l'état hydraté, un point de ramollissement inférieur a 35°C, *caractérisés en ce que* le produit de copolymérisation est constitué de

A) 9,98 a 55 % en poids d'un N-vinylamide de formule générale

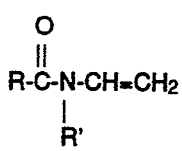

dans laquelle R et R' représentent chacun, indépendamment l'un de l'autre, des groupes alkyle en $C_1$-$C_4$,
B) 90 a 23 % en poids d'un ester de l'acide méthacrylique, contenant 1 à 8 atomes de carbone dans la fraction ester, éventuellement
C) 0 a 30 % en poids de monomères à insaturation oléfinique, copolymérisant avec A) et B),

D) 0,01 à 1 % en poids d'un agent de réticulation ester de l'acide (méth)acrylique polyfonctionnel et/ou
E) 0,01 à 1 % en poids d'un agent de réticulation allylique ou vinylique polyfonctionnel,
la somme des pourcentages en poids atteignant 100, tandis que le produit de copolymérisation présente

a) à une température de 25°C, une capacité d'absorption de l'eau de 4 à 50 % en poids, calculé a l'état hydraté, et
b) à l'état sec, une température de transition de verre de 25 à 55°C.

2. Corps moulés selon la revendication 1, *caractérisés en ce que* le produit de copolymérisation a une capacité d'absorption de l'eau de 5 à 35 % en poids.

3. Corps moulés selon la revendication 1 ou 2, *caractérisés en ce que* le produit de copolymérisation présente, à l'état sec, une température de transition de verre de 28 à 45°C.

4. Corps moulés selon les revendications 1 à 3, *caractérisés en ce que* le produit de copolymérisation, à l'état hydraté, présente une température de transition de verre de 20 à 35°C.

5. Corps moulés selon les revendications 1 a 4, *caractérisés en ce que* le corps moulé présente lors de l'hydratation, une augmentation d'épaisseur de 2 à 20 %.

6. Corps moulés selon les revendications 1 a 5, *caractérisés en ce que*, lors de la fabrication du produit de copolymérisation, on utilise conjointement 0,01 à 3 % en poids d'agents de réticulation présentant au moins 2 groupes insaturés à l'oléfine.

7. Corps moulés selon la revendication *caractérises en ce que* l'on utilise une combinaison d'agent de réticulation ester de l'acide (méth)acrylique et d'agent de réticulation vinylique ou allylique.

8. Corps moulés selon la revendication 7, *caractérisés en ce que* la fraction constituée du composant A) représente 9,98 a 35 % en poids.

9. Corps moulés selon la revendication 7 ou 8, *caractérisés en ce que* la fraction constituée du composant B) représente 90 à 33 % en poids.

10. Procédé de fabrication de corps moulés optiques de contact, ce procédé étant *caractérisé en ce que* l'on polymérise

A) 9,98 a 55 % en poids d'un N-vinylamide de formule générale

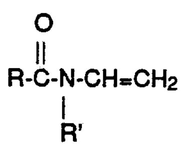

dans laquelle R et R' représentent chacun, indépendamment l'un de l'autre, des groupes alkyle en $C_1$-$C_4$,
B) 90 à 23 % en poids d'un ester de l'acide méthacrylique, contenant 1 a 8 atomes de carbone dans la fraction ester, en combinaison avec 0 a 20 % en poids de méthacrylate de méthyle, ainsi qu'éventuellement
C) 0 à 30 % en poids d'un ou de plusieurs monomères à insaturation oléfinique, copolymérisant avec A) et B),
D) 0,01 à 1 % en poids d'un agent de réticulation ester de l'acide (méth)acrylique polyfonctionnel et/ou
E) 0,01 à 1 % en poids d'un agent de réticulation allylique ou vinylique polyfonctionnel,
en présence d'un agent formateur de radicaux, les monomères ainsi que leur constitution quantitative étant sélectionnés de telle sorte que le produit de copolymérisation présente, à l'état sec, une température de transition de verre comprise de 25 à 55°C, et une transparence de > 95 %.

11. Utilisation de produits de copolymérisation constitués de

A) 9,98 à 55 % en poids d'un N-vinylamide de formule générale

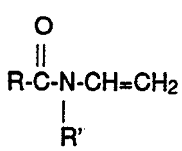

dans laquelle R et R' représentent chacun, indépendamment l'un de l'autre, des groupes alkyle en $C_1$-$C_4$,
B) 90 à 23 % en poids d'un ester de l'acide méthacrylique, contenant 1 a 8 atomes de carbone dans la fraction ester,

en combinaison, ainsi 20 % en poids de méthacrylate de méthyle, ainsi qu'éventuellement

C) 0 à 30 % en poids d'un ou de plusieurs monomères à insaturation oléfinique, copolymérisant avec A) et B),

D) 0,01 à 1 % en poids d'un agent de réticulation ester de l'acide (méth)acrylique polyfonctionnel et/ou

E) 0,01 a 1 % en poids d'un agent de réticulation allylique ou vinylique polyfonctionnel,

les monomères et leurs constitutions quantitatives étant sélectionnés de telle sorte que le produit de copolymérisation présente, à l'état sec, une température de transition de verre de 25 à 55°C, et une transparence de > 95 %, pour la fabrication de corps moulés optiques de contact.